# FASCICULE DE BREVET EUROPEEN

(11) **EP 1 349 769 B1**
(45) Date de publication et mention de la délivrance du brevet: **16.08.2006**
(21) Numéro de dépôt: 01272057.9
(22) Date de dépôt: 06.12.2001
(51) Int. Cl.: B62K 15/00

(54) **BICYCLETTE PLIABLE**
KLAPPFAHRRAD
FOLDING BICYCLE

(30) Priorité: 27.12.2000 FR 0017096
(43) Date de publication de la demande: 08.10.2003
(73) Titulaire: MOBIKY, 14112 Bieville Beuville (FR)
(72) Inventeur: BIGOT, Henri, F-94000 Crèteil (FR)
(74) Mandataire: Lavialle, Bruno François Stéphane
(86) Numéro de dépôt international: PCT/FR2001/003859
(87) Numéro de publication internationale: WO 2002/051697

(56) Documents cités:
- EP-A- 0 296 633
- WO-A-99/38759
- PATENT ABSTRACTS OF JAPAN vol. 1995, no. 11, 26 décembre 1995 (1995-12-26) -& JP 07 205864 A (DAIKIN MFG CO LTD), 8 août 1995 (1995-08-08)
- PATENT ABSTRACTS OF JAPAN vol. 1995, no. 11, 26 décembre 1995 (1995-12-26) -& JP 07 205863 A (DAIKIN MFG CO LTD), 8 août 1995 (1995-08-08)

## Description

La présente invention concerne une bicyclette pliable.

Il existe de nombreuses structures de bicyclettes qui permettent un repliement de la bicyclette de telle manière à limiter l'encombrement de la bicyclette non utilisée et faciliter son rangement.

Toutes ces bicyclettes comprennent un cadre qui comporte une partie avant sur laquelle est montée pivotante une tige de direction ayant une extrémité inférieure pourvue d'une première roue et une extrémité supérieure pourvue d'un guidon, une partie arrière sur laquelle est montée une seconde roue, et une partie centrale sur laquelle sont montés une selle et un pédalier relié à la roue arrière par un moyen de transmission.

A l'état déplié, quelle que soit la structure de bicyclette considérée, la selle, le pédalier, la tige de direction, la roue avant et la roue arrière sont contenues dans un même plan et la bicyclette présente un empattement (c'est-à-dire la distance entre les roues avant et arrière) suffisamment grand pour lui assurer la stabilité nécessaire à son utilisation comme moyen de transport.

En revanche, la disposition des éléments constitutifs de la bicyclette à l'état replié est différente selon la structure de bicyclette considérée.

Il est connu, notamment des documents EP-A-0 323 964 et GB-A-2 021 055, des bicyclettes dont les roues s'étendent sensiblement côte à côte lorsque la bicyclette est dans son état plié. Cette configuration est intéressante compte tenu du faible encombrement qu'elle présente. En revanche, elle nécessite que le cadre présente des éléments reliés les uns aux autres par des articulations ayant des axes non parallèles, de sorte que la réalisation de la structure de ces bicyclettes est relativement compliquée. Le repliement et le déploiement de la bicyclette ne sont pas toujours aisés notamment du fait de la complexité des manoeuvres qu'il est nécessaire de réaliser. De plus, une fois la bicyclette repliée, il est en général nécessaire de la porter, ce qui est rendu délicat en particulier en raison du poids de celle-ci.

On connaît également, notamment du document EP-A-0 388 540, une bicyclette dont les roues s'étendent l'une derrière l'autre lorsqu'elle est à l'état replié. Toutefois, là encore, la structure de cette bicyclette est relativement complexe. En outre, compte tenu de l'agencement des éléments constitutifs de la bicyclette une fois repliée, le seul moyen de transporter la bicyclette dans l'état replié consiste à la porter.

Ainsi, avec une bicyclette pliable de type connu, l'utilisateur abordant une zone piétonnière (comme une voie piétonne ou un local fermé comme un magasin) doit soit pousser sa bicyclette dépliée à côté de lui, la bicyclette risque alors, compte tenu de sa longueur limitant sa maniabilité, de gêner les autres piétons en particulier dans les lieux très fréquentés, soit laisser sa bicyclette en-dehors de la zone piétonnière, l'utilisateur risque alors de se la faire dérober, soit de la replier et de la porter pour accéder au lieu piétonnier, l'utilisateur est alors gêné dans ses déplacements et risque de se fatiguer rapidement.

On connaît par ailleurs (voir par exemple JP 07 205 864) des bicyclettes pliables comprenant un cadre qui comporte une partie avant sur laquelle est montée pivotante une tige de direction ayant une extrémité inférieure pourvue d'une première roue et une extrémité supérieure pourvue d'un guidon, une partie centrale sur laquelle sont montés une selle et un pédalier et une partie arrière qui comprend un bras ayant une première extrémité sur laquelle une seconde roue reliée au pédalier par un moyen de transmission est fixée et une deuxième extrémité opposée reliée à la partie centrale par une articulation de sorte que la roue arrière est mobile entre une position écartée et une position rapprochée de la roue avant. Ainsi, il est possible de réduire l'empattement de la bicyclette tout en maintenant les roues avant et arrière dans le plan de la bicyclette de telle manière que la bicyclette soit susceptible de rouler et d'être dirigée par un utilisateur poussant celle-ci à ses côtés. Il est alors plus facile pour l'utilisateur de s'introduire dans des lieux piétonniers en poussant sa bicyclette, et ceci sans gêner les autres personnes présentes dans ce lieu du fait de l'empattement réduit de la bicyclette. Toutefois, la manipulation et le verrouillage de la bicyclette dans ses différentes positions s'avèrent relativement complexes.

Un but de l'invention est de proposer une bicyclette pliable de ce type, qui dispose d'une structure simple permettant des manipulations de repliement et de déploiement aisées et rapides.

En vue de la réalisation de ce but, la bicyclette pliable comprend une selle solidaire d'une tige coulissant dans un fourreau monté sur la partie centrale pour coulisser entre une position d'utilisation dans laquelle la selle est éloignée du pédalier et une surface d'épaulement du fourreau est en butée sous la partie centrale et une position de rangement dans laquelle la selle est adjacente au pédalier, et en ce que le fourreau comprend des moyens de verrouillage du bras en position écartée qui sont agencés pour coopérer avec la deuxième extrémité du bras et s'opposer à un déplacement du fourreau vers sa position de rangement lorsque le fourreau est en position d'utilisation.

La manipulation du fourreau permet le verrouillage de la roue en position écartée, de sorte que le verrouillage peut être simple et rapide. Les moyens de verrouillage assurent une double fonction à savoir immobiliser la roue arrière en position écartée et maintenir le fourreau en position d'utilisation, ce qui permet d'avoir une structure simple. En outre, l'utilisation d'un fourreau coulissant pour la tige de selle permet d'avoir une structure compacte de la bicyclette dans un état replié.

De préférence, la deuxième extrémité du bras comporte, au-delà de l'articulation, une surface de butée du bras sur une surface correspondante de la partie centrale pour définir la position écartée de la roue arrière, et la bicyclette comprend une tige de verrouillage du bras en position écartée, la tige de verrouillage ayant une extrémité montée sur le fourreau pour pivoter, lorsque le fourreau est en position d'utilisation, entre une position verrouillée dans laquelle l'extrémité opposée de la tige de verrouillage est en appui contre la deuxième extrémité du bras pour appliquer la surface de butée contre la surface correspondante de la partie centrale et une position déverrouillée dans laquelle l'extrémité opposée de la tige de verrouillage est escamotée par rapport à la deuxième extrémité du bras.

La tige de verrouillage assure alors une double fonction, lorsque la bicyclette est dans un état déplié, à savoir un verrouillage du bras en position écartée et un maintien du fourreau en position d'utilisation. Le repliement de la bicyclette est réalisé en escamotant l'extrémité libre de la tige de verrouillage pour d'une part libérer la deuxième extrémité du bras et permettre à celui-ci de venir en position rapprochée et, d'autre part, de permettre au fourreau de venir en position de rangement.

Avantageusement encore, la tige de verrouillage est pourvue au niveau de son extrémité montée sur le fourreau d'un taquet pour coopérer avec la deuxième extrémité du bras lorsque le fourreau est dans sa position de rangement et le bras est en position rapprochée, pour s'opposer à un déplacement du bras vers la position écartée.

Le verrouillage du bras dans ses deux positions est alors particulièrement simple.

Selon un mode de réalisation particulier, la partie avant et la partie centrale du cadre sont reliées par un parallélogramme déformable comportant des articulations d'axe sensiblement perpendiculaire audit plan et la partie arrière est montée sur la partie centrale par une articulation d'axe sensiblement perpendiculaire audit plan de telle manière que les roues soient mobiles l'une par rapport à l'autre entre une position écartée correspondant à l'état déplié de la bicyclette et une position rapprochée sous le pédalier correspondant à un état replié de la bicyclette.

Le repliement de la bicyclette peut alors être réalisé de manière simple et rapide en soulevant la partie centrale du cadre de manière que les roues puissent se replier sous le pédalier. La structure de la bicyclette est en outre relativement simple.

Selon une caractéristique particulière, la bicyclette comprend une tringle de synchronisation des déplacements des parties avant et arrière, la tringle de synchronisation ayant une extrémité fixée au parallélogramme déformable et une extrémité fixée à la deuxième extrémité du bras.

Ceci simplifie les manipulations en coordonnant les mouvements des parties avant et arrière.

Selon une autre caractéristique particulière, le moyen de transmission comprend un plateau intermédiaire double monté pour pivoter sur l'axe d'articulation de la partie arrière à la partie centrale du cadre, et relié d'une part au pédalier pour être entraîné par celui-ci et d'autre part à la roue arrière pour entraîner celle-ci.

Lorsque la transmission est réalisée par des liens flexibles comme des chaînes ou des courroies, l'utilisation d'un plateau intermédiaire double permet de conserver des longueurs de liens constantes et peut éventuellement assurer une démultiplication particulièrement utile lorsque la bicyclette a des roues de petit diamètre.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue de profil d'une bicyclette conforme à l'invention dans un état déplié,
- la figure 2 est une vue analogue à la figure 1 de la bicyclette dans un état semi-replié,
- la figure 3 est une vue analogue à la figure 1 de la bicyclette dans un état replié,
- la figure 4 est une vue partielle de profil, selon un côté opposé à celui de la figure 1, de la bicyclette conforme à l'invention dans un état déplié,
- la figure 5 est une vue partielle en coupe du dispositif de verrouillage de la bicyclette en position dépliée (a.) et en position semi-repliée ou repliée (b.),
- les figures 6 et 7 sont des vues partielles en perspective d'une articulation du cadre, respectivement en position fermée et en position ouverte, dans une variante de réalisation de la bicyclette.

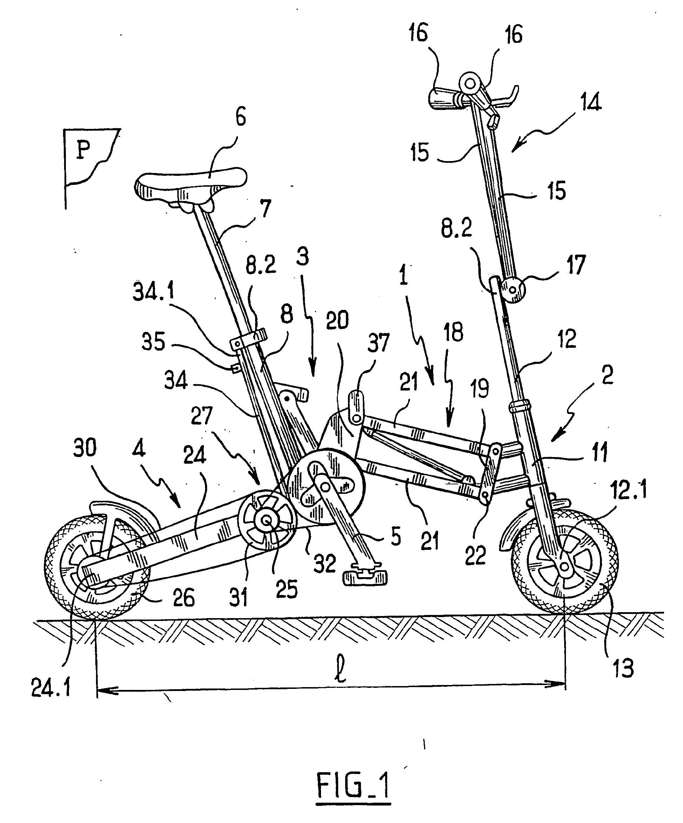

En référence aux figures 1 à 5, la bicyclette conforme à l'invention comprend un cadre généralement désigné en 1 comportant une partie avant 2, une partie centrale 3 et une partie arrière 4.

La partie centrale 3 sert de support à un pédalier 5 et une selle 6.

Le pédalier 5 est monté à pivotement de manière classique sur la partie centrale 3 et comprend des pédales relevables de type connu. La selle 6 est fixée à une extrémité d'une tige de selle 7 reçue à coulissement dans un fourreau 8. Le coulissement de la tige de selle 7 dans le fourreau 8 permet d'adapter la hauteur de la selle à différentes tailles d'utilisateurs. La position de la tige de selle 7 dans le fourreau 8 est bloquée de manière classique par serrage.

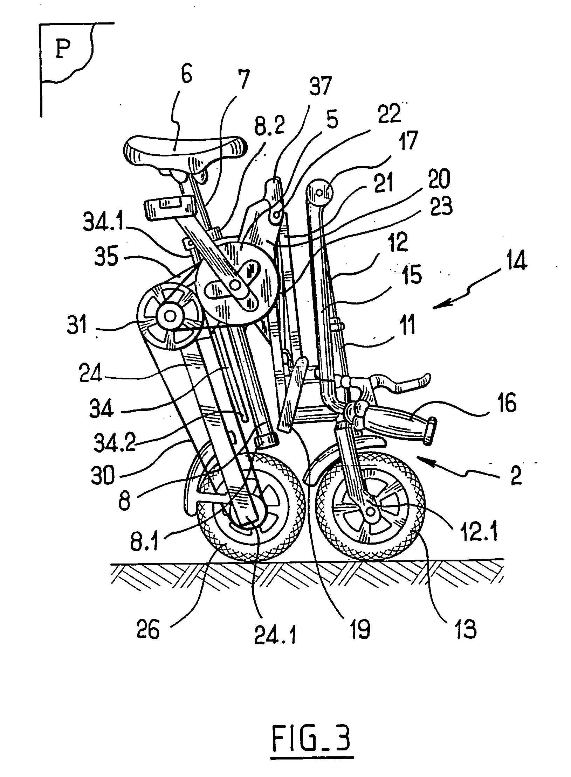

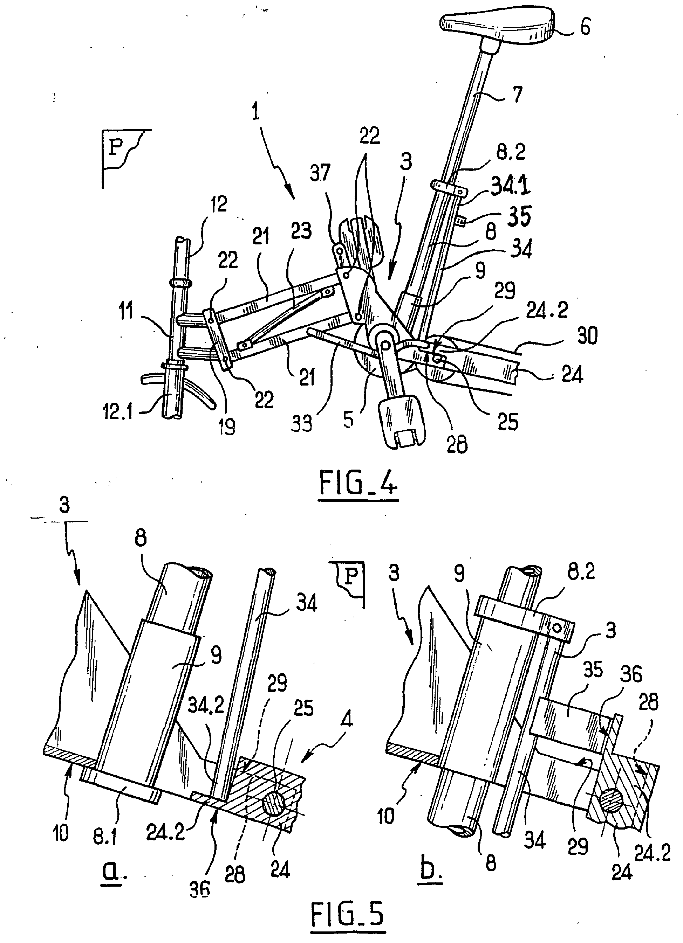

Le fourreau 8 possède une extrémité inférieure 8.1 formant un épaulement de butée et une extrémité supérieure 8.2 formant également un épaulement de butée. Le fourreau 8 est monté dans une douille 9 solidaire de la partie centrale 3 pour coulisser entre une position d'utilisation (représentée aux figures 1, 2, 4 et 5.a) dans laquelle l'épaulement 8.1 est en butée contre une surface inférieure 10 de la partie centrale 3 et la selle 6 est éloignée du pédalier 5 et une position de rangement (représentée aux figures 3 et 5.b) dans laquelle l'épaulement 8.2 est en butée contre l'extrémité supérieure de la douille 9 et la selle 6 est rapprochée du pédalier 5.

La partie avant 2 comprend un tube de guidage 11 recevant à pivotement une tige de direction 12 ayant une extrémité inférieure 12.1 formant une fourche sur laquelle est montée une roue 13 et une extrémité supérieure 8.2 sur laquelle est monté un guidon généralement désigné en 14. Le guidon 14 comprend ici deux tiges 15 ayant des extrémités inférieures montées pour pivoter sur l'extrémité supérieure 12.2 de la tige de direction 12 et des extrémités supérieures pourvues de poignées 16. Le blocage en position des tiges 15 est assuré par une molette de serrage 17. De préférence, les poignées 16 sont montées sur les tiges 15 pour pivoter autour de celles-ci. Le guidon 14 comporte également des crochets pour l'accrochage d'un cartable (visibles à la figure 1).

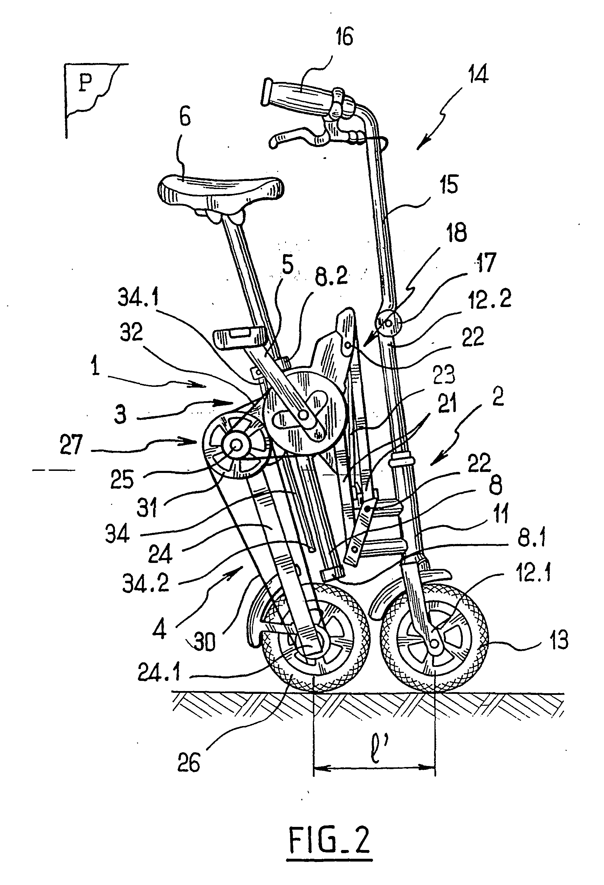

La partie avant 2 et la partie centrale 3 sont reliées l'une à l'autre de telle manière que la selle 6, le tube de selle 7, le fourreau 8, la douille 9, le tube de guidage 11, le tube de direction 12, la roue 13 et le guidon 14 s'étendent dans un même plan P. La partie avant 2 est ici reliée à la partie centrale 3 par l'intermédiaire d'un parallélogramme déformable généralement désigné en 18. Le parallélogramme déformable 18 comprend deux plaques 19 en regard parallèles au plan P et solidaires du tube de guidage 11, deux plaques 20 en regard parallèles au plan P et solidaires de la partie centrale 3 et deux profilés 21 qui s'étendent dans le plan P parallèlement l'un à l'autre et qui ont des extrémités opposées fixées aux plaques 19 et aux plaques 20 par l'intermédiaire d'axes d'articulation 22 s'étendant perpendiculairement au plan P entre ces plaques. Le parallélogramme 18 est ainsi déformable entre un état déployé dans lequel la roue 13 est dans une position écartée et s'étend latéralement par rapport à la partie centrale 3 (figure 1) et un état aplati dans lequel la roue 13 s'étend sensiblement sous le pédalier 5 (figures 2 et 3).

Une biellette télescopique 23 est fixée en biais entre les profilés 21 de telle manière que la biellette télescopique 23 a une extrémité fixée sur le profilé 21 supérieur à proximité de la partie centrale 3 et une extremité opposée fixée sur le profilé 21 inférieur à proximité de la partie avant 2. La biellette 23 est télescopique entre un état rétracté dans lequel elle possède des moyens de butée en compression qui sont en appui et le parallélogramme déformable est dans son état déployé et un état déployé dans lequel les moyens de butée de la biellette télescopique 23 sont écartés l'un de l'autre et le parallélogramme déformable 18 est dans son état aplati.

La partie arrière 4 comprend un bras 24, ici dédoublé pour former une fourche, qui comprend deux extrémités 24.1 et 24.2 et qui est fixé entre ses deux extrémités à la partie centrale 3 par un axe d'articulation 25 perpendiculaire au plan P pour être mobile entre une position écartée dans laquelle l'extrémité 24.1 s'étend latéralement par rapport à la partie centrale 3 (figures 1, 4 et 5.a) et une position rapprochée dans laquelle l'extrémité 24.1 s'étend sous la partie centrale 3 (figures 2, 3 et 5.b). Une roue 26 est montée sur l'extrémité 24.1 et est reliée par un moyen de transmission généralement désigné en 27 au pédalier 5. L'extrémité 24.2 s'étend au-delà de l'axe d'articulation 25 et comprend une surface inférieure de butée 28 destinée à coopérer avec une surface supérieure de butée 29 de la partie centrale 3 pour définir la position écartée du bras 24 et donc de la roue 26.

Le moyen de transmission 27 comprend une chaîne 30 enroulée autour d'un pignon solidaire de la roue 26 et d'un premier plateau d'un double plateau intermédiaire 31 monté pour pivoter sur un axe confondu avec l'axe 25. Le second plateau du double plateau intermédiaire 31 est relié au plateau du pédalier 5 par l'intermédiaire d'une deuxième chaîne 32 s'étendant autour de ceux-ci. Des courroies ou tout autre mode de transmission peuvent être utilisés à la place des chaînes.

Une tringle de synchronisation 33 (visible à la figure 4) est reliée à l'extrémité 24.2 du bras 24 et au profilé inférieur 21 du parallélogramme déformable 18 de telle manière que les mouvements des roues 13 et 26 entre leurs positions écartée et rapprochée soient coordonnés.

La bicyclette comprend également une tige de verrouillage 34 possédant une extrémité 34.1 montée sur l'extrémité supérieure 8.2 du fourreau 8 pour pivoter entre une position verrouillée dans laquelle, le bras 24 étant en position écartée et le fourreau 8 étant en position d'utilisation, la tige de verrouillage 34 a une extrémité opposée libre 34.2 qui est écartée du fourreau 8 pour être en appui contre la deuxième extrémité 24.2 du bras 24 pour appliquer la surface de butée 28 contre la surface de butée 29 (voir figure 5.a) et une position déverrouillée dans laquelle l'extrémité libre est rapprochée du fourreau 8 et escamotée par rapport à la deuxième extrémité 24.2 du bras 24 (voir figures 2 et 3).

Un taquet 35 est solidaire de la tige de verrouillage 34 du côté de son extrémité supérieure 34.1 pour venir en appui contre une surface inférieure 36 de l'extrémité 24.2 lorsque le bras 24 est en position rapprochée et le fourreau 8 est en position de rangement de manière à s'opposer à un déplacement du bras 24 vers sa position écartée (voir figure 5.b).

Les roues 13 et 26 étant en position écartée et le fourreau 8 étant en position d'utilisation comme représenté à la figure 1, le repliement de la bicyclette est réalisé en faisant pivoter la tige de verrouillage 31 vers le fourreau 8 pour laisser descendre le fourreau 8 vers sa position de rangement en entraînant avec lui la tige de verrouillage 34. L'extrémité 24.2 du bras 24 est alors libérée.

L'utilisateur soulève ensuite la partie centrale 3, par exemple au moyen d'une poignée 37 solidaire de celle-ci, ce qui provoque le pivotement du bras 24 amenant la roue 26 vers sa position rapprochée et l'aplatissement du parallélogramme déformable 18 amenant la roue 13 vers sa position rapprochée. La tringle 33 permet de synchroniser ces deux mouvements. On remarquera que l'utilisateur ne soulève que la partie centrale 3, les roues 13 et 26 continuant d'assurer leur fonction de points d'appui des parties avant et arrière 3, 4 sur le sol.

L'utilisateur poursuit le mouvement de soulèvement jusqu'à l'aplatissement complet du parallélogramme déformable 18 et le fourreau 8 se déplace par rapport à la partie centrale 3 jusqu'à ce que l'épaulement de l'extrémité 8.2 arrive en butée de la douille 9. Le taquet 35 s'étend alors entre la surface 36 de l'extrémité 22 du bras 24 en position rapprochée et la tige 34 pour constituer une butée s'opposant à la rotation du bras 24 vers sa position écartée (figure 5.b). Pour faciliter le repliement de la bicyclette, on peut associer un ressort à la biellette télescopique 23 tendant à déployer la biellette télescopique 23 et aplatir le parallélogramme déformable 18.

Les roues 13 et 26 sont alors rapprochées l'une de l'autre sur le pédalier 5 et constituent les seuls points d'appui de la bicyclette sur le sol. Aucun des autres constituants de la bicyclette ne vient interférer avec le sol et gêner le roulement de la bicyclette. La bicyclette se trouve ainsi dans l'état représenté à la figure 2 et est susceptible d'être poussée par l'utilisateur à côté de celui-ci pour pénétrer dans une zone piétonnière. La bicyclette ainsi repliée présente un empattement réduit limitant la gêne que peut occasionner la bicyclette aux autres piétons et améliorant sa maniabilité.

Il est possible de diminuer encore l'encombrement de la bicyclette, par exemple pour procéder à son rangement dans un placard, en rentrant la selle 6, repliant les pédales du pédalier 5, ramenant les tiges 15 du guidon 14 sur la roue avant 13 pour obtenir la configuration représentée à la figure 3 qui présente un encombrement minimum.

On remarquera que l'utilisation de roues de petit diamètre permet d'avoir une diminution très importante de l'empattement. Le double plateau intermédiaire est alors de préférence agencé pour compenser le faible diamètre de la roue arrière afin d'obtenir un développement similaire à celui obtenu avec des grandes roues.

Le déploiement de la bicyclette est réalisé simplement en soulevant la selle 6 de manière à amener le fourreau 8 dans sa position d'utilisation. Le taquet 35 est alors dégagé de l'extrémité 24.2 du bras 24 et le bras 24 peut pivoter pour amener la roue 26 dans sa position écartée et, grâce à la tringle 33, le déploiement du parallélogramme déformable 18 pour amener la roue 13 dans sa position écartée. On notera que la partie centrale 3 tend à descendre sous l'effet de son poids et écarte les roues l'une de l'autre, ce qui facilite le déploiement de la bicyclette.

L'épaulement 8.1 arrivant en butée sur la partie centrale 3 et la roue 26 arrivant en position écartée, l'extrémité 24.2 du bras 24 passe sous l'extrémité libre 34.2 de la tige de verrouillage 34 qui revient dans sa position verrouillée écartée du fourreau 8 et bloque le bras 24 en position écartée (voir la figure 1).

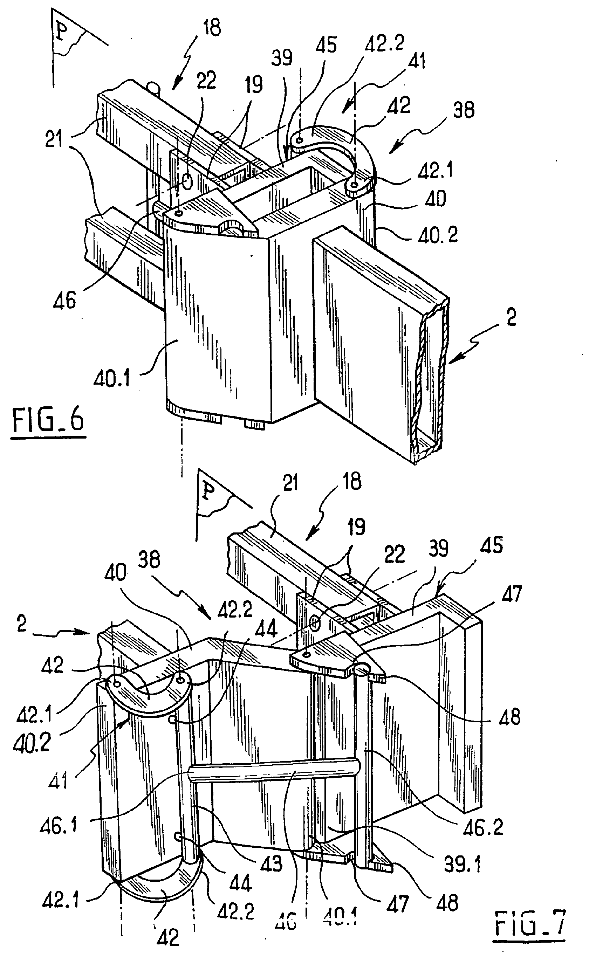

En référence aux figures 6 et 7 et dans une variante de la bicyclette permettant d'obtenir une configuration encore plus compacte de celle-ci dans l'état replié, le parallélogramme déformable 18 est relié au tube de guidage 11 par l'intermédiaire d'une articulation généralement désignée en 38 d'axe déporté par rapport au plan P pour pivoter entre une position d'utilisation dans laquelle la partie avant 2 est dans le prolongement du parallélogramme déformable 18 et de la partie arrière 4 et une position de rangement dans laquelle la partie avant 2 est ramenée le long de la partie arrière 4.

L'articulation 38 comprend une plaque 39 solidaire du parallélogramme déformable 18 (les plaques 19 sont ici fixées sur la plaque 39 perpendiculairement à celle-ci) et une plaque 40 fixée au tube de guidage 11. Les plaques 39 et 40 ont ici une section transversale coudée et ont deux bords adjacents 39.1 et 40.1 sensiblement verticaux articulés l'un à l'autre.

L'articulation comprend des moyens de son verrouillage dans des positions fermée et ouverte correspondant aux positions d'utilisation et de rangement.

Les moyens de verrouillage comprennent une bride 41 comportant ici deux arceaux parallèles 42 ayant des extrémités 42.1 fixées de part et d'autre du bord 40.2 de la plaque 40 opposé au bord articulé 40.1 pour pivoter, et des extrémités opposées 42.2 entre lesquelles est fixée à pivotement une tige 43 formant une came de serrage et comprenant des ergots 44 destinés à coopérer avec des renfoncements de la face arrière 45 de la plaque 39 lorsque l'articulation 38 est en position fermée pour forcer les plaques 39, 40 en appui l'une contre l'autre.

La tige 43 formant came de serrage est associée à un élément de manoeuvre 46 en forme de T, l'extrémité libre 46.1 de la jambe du T étant fixée à la tige formant came de serrage.

En position fermée, l'élément de manoeuvre 46 s'étend le long du parallélogramme déformable 18.

En position ouverte, l'extrémité libre 46.2, formée de la barre du T est introduite dans des encoches 47 ménagées dans des bords de plaquettes 48 solidaires de la plaque 39 et sensiblement perpendiculaires à l'axe d'articulation 38 de telle manière que les arceaux 42, la came de serrage 43 et l'élément de manoeuvre 46 forment une genouillère qui peut être arc-boutée pour maintenir l'articulation en position ouverte.

Bien entendu, l'invention n'est pas limitée au mode de réalisation décrit et on peut y apporter des variantes de réalisation sans sortir du cadre de l'invention tel que défini par les revendications.

En particulier, d'autres moyens de réduction de l'empattement et de maintien des roues dans un même plan peuvent être utilisés et notamment des moyens coulissants ou résultant d'inversions cinématiques. De même, d'autres moyens de butée ou de verrouillage de la bicyclette dans ses états déployé, semi-replié ou replié peuvent être prévus.

Par ailleurs, on peut équiper la bicyclette de moyens de suspension, comme une fourche télescopique pour la roue avant, un amortisseur pour la roue arrière...

## Revendications

1. Bicyclette pliable comprenant un cadre (1) qui comporte une partie avant (2) sur laquelle est montée pivotante une tige de direction (12) ayant une extrémité inférieure pourvue d'une première roue (13) et une extrémité supérieure pourvue d'un guidon (14), une partie centrale (3) sur laquelle sont montés une selle (6) et un pédalier (5) et une partie arrière (4) qui comprend un bras (24) ayant une première extrémité (24.1) sur laquelle une seconde roue (26) reliée au pédalier (5) par un moyen de transmission (27) est fixée et une deuxième extrémité (24.2) opposée reliée à la partie centrale par une articulation (25) de sorte que la roue arrière est mobile entre une position écartée et une position rapprochée de la roue avant, **caractérisée en ce que** la selle est solidaire d'une tige (7) coulissant dans un fourreau (8) monté sur la partie centrale (3) pour coulisser entre une position d'utilisation dans laquelle la selle (6) est éloignée du pédalier (5) et une surface d'épaulement (8.1) du fourreau est en butée sous la partie centrale et une position de rangement dans laquelle la selle est adjacente au pédalier, et **en ce que** le fourreau comprend des moyens de verrouillage du bras en position écartée qui sont agencés pour coopérer avec la deuxième extrémité du bras et s'opposer à un déplacement du fourreau vers sa position de rangement lorsque le fourreau est en position d'utilisation.

2. Bicyclette pliable selon la revendication 1, **caractérisée en ce que** la deuxième extrémité du bras comporte, au-delà de l'articulation (25), une surface (28) de butée du bras sur une surface correspondante (29) de la partie centrale (4) pour définir la position écartée de la roue arrière, et **en ce que** la bicyclette comprend une tige (34) de verrouillage du bras (24) en position écartée, la tige de verrouillage (34) ayant une extrémité (34.1) montée sur le fourreau (8) pour pivoter, lorsque le fourreau est en position d'utilisation, entre une position verrouillée dans laquelle l'extrémité opposée (34.2) de la tige de verrouillage est en appui contre la deuxième extrémité (24.2) du bras (24) pour appliquer la surface de butée (28) contre la surface correspondante (29) de la partie centrale (8) et une position déverrouillée dans laquelle l'extrémité opposée (34.2) de la tige de verrouillage est escamotée par rapport à la deuxième extrémité (24.2) du bras (24).

3. Bicyclette pliable selon la revendication 2, **caractérisée en ce que** la tige de verrouillage (34) est pourvue au niveau de son extrémité (34.1) montée sur le fourreau (8) d'un taquet (35) pour coopérer avec la deuxième extrémité (24.2) du bras (24) lorsque le fourreau est dans sa position de rangement et le bras est en position rapprochée, pour s'opposer à un déplacement du bras vers la position écartée.

4. Bicyclette pliable selon l'une quelconque des revendications 1 à 3, **caractérisée en ce que** la partie avant (2) et la partie centrale (3) du cadre (1) sont reliées par un parallélogramme déformable (18) comportant des articulations (22) d'axes sensiblement perpendiculaires un plan (P) contenant la bicyclette en état déplié et l'articulation (25) a un axe sensiblement perpendiculaire audit plan de telle manière que les roues (13, 26) soient mobiles l'une par rapport à l'autre entre une position écartée correspondant à l'état déplié de la bicyclette et une position rapprochée sous le pédalier (5) correspondant à un état replié de la bicyclette.

5. Bicyclette pliable selon la revendication 4, **caractérisée en ce qu'**elle comprend une tringle (33) de synchronisation des déplacements des parties avant (2) et arrière (4), la tringle de synchronisation ayant une extrémité fixée au parallélogramme déformable (18) et une extrémité fixée à la deuxième extrémité (24.2) du bras (24).

6. Bicyclette pliable selon la revendication 4 ou la revendication 5, **caractérisée en ce qu'**elle comprend une biellette (23) s'étendant entre deux côtés opposés (21) du parallélogramme déformable (18), la biellette étant télescopique entre un état rétracté correspondant à la position écartée de la roue avant (13) et un état déployé correspondant à la position rapprochée de la roue avant.

7. Bicyclette pliable selon la revendication 6, **caractérisée en ce que** la biellette (23) du parallélogramme déformable (18) est associée à un ressort d'assistance à son déploiement.

8. Bicyclette pliable selon l'une quelconque des revendications 4 à 7, **caractérisée en ce que** la partie avant (2) est reliée au parallélogramme déformable (18) par une articulation (38) déportée par rapport audit plan et d'axe sensiblement vertical pour pivoter entre une position d'utilisation dans laquelle la partie avant (2) est dans le prolongement du parallélogramme déformable (18) et une position repliée dans laquelle la partie avant (2) est ramenée le long de la partie arrière (4), et **en ce que** l'articulation (39) comprend des moyens de son verrouillage dans chacune de ses positions.

9. Bicyclette pliable selon la revendication 8, **caractérisée en ce que** l'articulation comprend une première et une deuxième plaques (39, 40) ayant des bords adjacents (39.1, 40.1) articulés l'un à l'autre, une des plaques (39) étant solidaire du parallélogramme déformable (18) et l'autre des plaques (40) étant solidaire de la partie avant (2), et **en ce que** les moyens de verrouillage comprennent une bride (41) ayant une extrémité (42.1) montée pour pivoter sur un bord libre (40.2) opposé au bord articulé (40.1) de la première plaque (40) et une extrémité opposée (42.2) reliée à une came (43) de serrage de la bride sur une face (45) arrière de la deuxième plaque lorsque l'articulation est dans la position d'utilisation et **en ce que** la came de serrage (43) est associée à une extrémité (46.1) d'une tige de manoeuvre (46) ayant une extrémité opposée (46.2) agencée pour coopérer avec la deuxième plaque lorsque l'articulation est dans sa position repliée de telle manière que la bride et la tige de manoeuvre de la came de serrage forme une genouillère de maintien par arc-boutement de l'articulation dans sa position de rangement.

10. Bicyclette pliable selon l'une quelconque des revendications 1 à 9, **caractérisée en ce que** le moyen de transmission comprend un plateau intermédiaire double (31) monté pour pivoter sur l'axe d'articulation (25) de la partie arrière (4) à la partie centrale (3) du cadre (1), et relié d'une part au pédalier (5) pour être entraîné par celui-ci et d'autre part à la roue arrière (26) pour entraîner celle-ci.

## Claims

1. A folding bicycle comprising a frame (1) having a front portion (2) on which a steering post (12) is pivotally mounted, the steering post having a bottom end provided with a first wheel (13) and a top end provided with handlebars (14), a central portion (3) on which a seat (6) and a pedal unit (5) are mounted, and a rear portion (4) which comprises an arm (24) having a first end (24.1) on which a second wheel (26) is mounted, the second wheel being connected to the pedal unit (5) by transmission means (27), and an opposite, second end (24.2) connected to the central portion by a hinge (25) so that the rear wheel is movable between a spaced-apart position and a close-together position relative to the front wheel, the bicycle being **characterized in that** the seat is secured to a post (7) slidably received in a sheath (8) mounted on the central portion (3) to slide between an in-use position in which the seat (6) is remote from the pedal unit (5) and a shoulder surface (8.1) of the sheath is in abutment beneath the central portion, and a stowage position in which the seat is adjacent to the pedal unit, and **in that** the sheath has means for locking the arm in the spaced-apart position, which means are arranged to co-operate with the second end of the arm and oppose movement of the sheath towards its stowage position when the sheath is in its in-use position.

2. A folding bicycle according to claim 1, **characterized in that** the second end of the arm has an arm abutment surface (28) beyond the hinge (25) for coming into abutment against a corresponding surface (29) of the central portion (4) to define the spaced-apart position of the rear wheel, and **in that** the bicycle includes a rod (34) for locking the arm (24) in the spaced-apart position, the locking rod (34) having one end (34.1) mounted on the sheath (8) to pivot when the sheath is in its in-use position between a locked position in which the opposite end (34.2) of the locking rod bears against the second end (24.2) of the arm (24) to press the abutment surface (28) against the corresponding surface (29) of the central portion (3), and an unlocked position in which the opposite end (34.2) of the locking rod is retracted relative to the second end (24.2) of the arm (24).

3. A folding bicycle according to claim 2, **characterized in that** the locking rod (34) is provided at its end (34.1) mounted on the sheath (8) with a stop (35) for cooperating with the second end (24.2) of the arm (24) when the sheath is in its stowage position and the arm is in its close-together position, so as to oppose displacement of the arm towards its spaced-apart position.

4. A folding bicycle according to any one of claims 1 to 3, **characterized in that** the front portion (2) and the central portion (3) of the frame (1) are connected together by a deformable parallelogram (18) having hinges (22) with axes substantially perpendicular to the plane (P) containing the bicycle in the unfolded state, and the hinge (25) has an axis substantially perpendicular to said plane in such a manner that the wheels (13, 26) are movable relative to each other between a spaced-apart position corresponding to the bicycle being in its unfolded state, and a close-together position beneath the pedal unit (5) corresponding to the bicycle being in a folded state.

5. A folding bicycle according to claim 4, **characterized in that** it includes a synchronizing rod (33) for synchronizing the movements of the front and rear portions (2 and 4), the synchronizing rod having one end fixed to the deformable parallelogram (18), and one end fixed to the second end (24.2) of the arm (24).

6. A folding bicycle according to claim 4 or claim 5, **characterized in that** it includes a link (23) extending between two opposite sides (21) of the deformable parallelogram (18), the link being telescopic between a retracted state corresponding to the front wheel (13) being in its spaced-apart position, and a deployed state corresponding to the front wheel being in its close-together position.

7. A folding bicycle according to claim 6, **characterized in that** the link (23) of the deformable parallelogram (18) is associated with a spring providing assistance in deploying the link.

8. A folding bicycle according to any one of claims 4 to 7, **characterized in that** the front portion (2) is connected to the deformable parallelogram (18) by a hinge (38) having its axis offset from said plane and substantially vertical so as to pivot between an in-use position in which the front portion is in line with the deformable parallelogram (18) and a folded position in which the front portion (2) is brought back beside the rear portion (4), and **in that** the hinge (39) includes means for locking the hinge in each of its positions.

9. A folding bicycle according to claim 8, **characterized in that** the hinge comprises first and second plates (39, 40) having adjacent edges (39.1, 40.1) hinged to each other, one of the plates (39) being secured to the deformable parallelogram (18) and the other plate (40) being secured to the front portion (2), and **in that** the locking means comprise a mechanism (41) having one end (42.1) mounted to pivot on a free edge (40.2) opposite from the hinged edge (40.1) of the first plate (40) and an opposite end (42.2) connected to a cam (43) for clamping the mechanism against a rear face (45) of the second plate when the hinge is in its in-use position and **in that** the clamping cam (43) is associated at one end (46.1) with a drive rod (46) having an opposite end (46.2) arranged to co-operate with the second plate when the hinge is in its folded position in such a manner that the mechanism and the clamping cam drive rod form an over-center toggle mechanism for bracing the hinge in its stowage position.

10. A folding bicycle according to any one of claims 1 to 9, **characterized in that** the transmission means include an intermediate pair of chain wheels (31) mounted to rotate about the hinge axis (25) between the rear portion (4) and the central portion (3) of the frame (1), and connected both to the pedal unit (5) to be driven thereby, and to the rear wheel (26) in order to drive it.

## Patentansprüche

1. Klappfahrrad, umfassend einen Rahmen (1), der einen vorderen Teil (2) umfasst, an dem drehbar eine Lenkstange (12) gelagert ist, die ein unteres Ende hat, das mit einem ersten Rad (13) versehen ist, sowie ein oberes Ende, das mit einem Lenker (14) versehen ist, einen zentralen Teil (3), an dem ein Sattel (6) und Tretkurbeln (5) angebracht sind, sowie einen hinteren Teil (4), der einen Arm (24) umfasst, der ein erstes Ende (24.1) hat, an dem ein zweites Rad (26) befestigt ist, das über Getriebemittel (27) mit den Tretkurbeln (5) verbunden ist, sowie ein entgegengesetztes zweites Ende (24.2), das über eine Gelenkverbindung (25) derart mit dem zentralen Teil verbunden ist, dass das Hinterrad zwischen einer vom Vorderrad entfernten Position und einer an das Vorderrad angenäherten Position beweglich ist, **dadurch gekennzeichnet, dass** der Sattel fest mit einer Stange (7) verbunden ist, die in einem Gleitrohr (8) verschiebbar ist, das an dem zentralen Teil (3) derart gelagert ist, dass es zwischen einer Gebrauchsstellung, in der der Sattel (6) von den Tretkurbeln (5) entfernt ist und eine Schulterfläche (8.1) des Gleitrohrs unter dem zentralen Teil anliegt, und einer Aufbewahrungsstellung beweglich ist, in der der Sattel an die Tretkurbeln angrenzt, und dass das Gleitrohr Mittel zur Verriegelung des Armes in der entfernten Position umfasst, die derart ausgebildet sind, dass sie mit dem zweiten Ende des Armes zusammenwirken und sich einer Bewegung des Gleitrohres in seine Aufbewahrungsstellung widersetzen, wenn das Gleitrohr in der Gebrauchsstellung ist.

2. Klappfahrrad nach Anspruch 1, **dadurch gekennzeichnet, dass** das zweite Ende des Armes zusätzlich zur Gelenkverbindung (25) eine Anschlagfläche (28) für den Anschlag des Armes an einer entsprechenden Fläche (29) des zentralen Teils (4) umfasst, um die entfernte Position des Hinterrades zu definieren, und dass das Fahrrad eine Stange (34) zur Verriegelung des Armes (24) in der entfernten Position umfasst, wobei die Verriegelungsstange (34) ein Ende (34.1) hat, das an dem Gleitrohr gelagert ist, um sich, wenn das Gleitrohr in der Gebrauchsstellung ist, zwischen einer verriegelten Position, in der das entgegengesetzte Ende (34.2) der Verriegelungsstange an dem zweiten Ende (24.2) des Armes (24) anliegt, um die Anschlagfläche (28) an die entsprechende Fläche (29) des zentralen Teils (8) zu drücken, und einer entriegelten Position zu verschwenken, in der das entgegengesetzte Ende (34.2) der Verriegelungsstange in Bezug auf das zweite Ende (24.2) des Armes (24) ausgerückt ist.

3. Klappfahrrad nach Anspruch 2, **dadurch gekennzeichnet, dass** die Verriegelungsstange (34) im Bereich ihres an dem Gleitrohr (8) gelagerten Endes (34.1) mit einer Sperrnase (35) versehen ist, um mit dem zweiten Ende (24.2) des Armes (24) zusammenzuwirken, wenn das Gleitrohr in seiner Aufbewahrungsstellung und der Arm in seiner angenäherten Position ist, um sich so einer Bewegung des Armes in Richtung der entfernten Position zu widersetzen.

4. Klappfahrrad nach einem der Ansprüche 1 bis 3, **dadurch gekennzeichnet, dass** der vordere Teil (2) und der zentrale Teil (3) des Rahmens (1) über ein verformbares Parallelogramm (18) verbunden sind, das Gelenkverbindungen (22) mit Achsen hat, die im Wesentlichen senkrecht zur Ebene (P) sind, in der das Fahrrad im ausgeklappten Zustand enthalten ist, und die Gelenkverbindung (25) eine Achse hat, die im Wesentlichen senkrecht zur genannten Ebene ist, derart, dass die Räder (13, 26) zueinander zwischen einer entfernten Position, die dem aufgeklappten Zustand des Fahrrads entspricht, und einer unter den Tretkurbeln (5) angenäherten Position beweglich sind, die einem eingeklappten Zustand des Fahrrads entspricht.

5. Klappfahrrad nach Anspruch 4, **dadurch gekennzeichnet, dass** es eine Stange (33) zur Synchronisation der Bewegungen des vorderen Teils (2) und des hinteren Teils (4) umfasst, wobei die Synchronisationsstange ein Ende hat, das an dem verformbaren Parallelogramm (18) befestigt ist, sowie ein Ende, das an dem zweiten Ende (24.2) des Armes (24) befestigt ist.

6. Klappfahrrad nach Anspruch 4 oder Anspruch 5, **dadurch gekennzeichnet, dass** es einen Doppellenker (23) umfasst, der sich zwischen zwei gegenüberliegenden Seiten (21) des verformbaren Parallelogramms (18) erstreckt, wobei der Doppellenker teleskopisch zwischen einem eingezogenen Zustand, der der entfernten Position des Vorderrades (13) entspricht, und einem ausgefahrenen Zustand verschoben werden kann, der der angenäherten Position des Vorderrades entspricht.

7. Klappfahrrad nach Anspruch 6, **dadurch gekennzeichnet, dass** der Doppellenker (23) des verformbaren Parallelogramms (18) mit einer Hilfsfeder zur Unterstützung seines Ausfahrens verbunden ist.

8. Klappfahrrad nach einem der Ansprüche 4 bis 7, **dadurch gekennzeichnet, dass** der vordere Teil (2) mit dem verformbaren Parallelogramm (18) über eine Gelenkverbindung (38) verbunden ist, die in Bezug auf die genannte Ebene versetzt ist und eine im Wesentlichen vertikale Achse hat, um sich zwischen einer Gebrauchsstellung, in der sich der vordere Teil (2) in der Verlängerung des verformbaren Parallelogramms (18) befindet, und einer eingeklappten Stellung zu verschwenken, in der der vordere Teil (2) an den hinteren Teil (4) angeklappt ist, und dass die Gelenkverbindung (38) Mittel für ihre Verriegelung in jeder ihrer Positionen umfasst.

9. Klappfahrrad nach Anspruch 8, **dadurch gekennzeichnet, dass** die Gelenkverbindung eine erste und eine zweite Platte (39, 40) umfasst, die benachbarte Ränder (39.1, 40.1) haben, die aneinander angelenkt sind, wobei eine der Platten (39) fest mit dem verformbaren Parallelogramm (18) verbunden ist und die andere der Platten (40) fest mit dem vorderen Teil (2) verbunden ist, und dass die Verriegelungsmittel einen Bügel (41) umfassen, der ein Ende (42.1) hat, das drehbar an einem freien Rand (40.2) gelagert ist, der dem angelenkten Rand (40.1) der ersten Platte (40) abgewandt ist, sowie ein entgegengesetztes Ende (42.2), das mit einer Spannnocke (43) zum Spannen des Bügels gegen eine Rückseite (45) der zweiten Platte verbunden ist, wenn die Gelenkverbindung in der Gebrauchsstellung ist, und dass die Spannnocke (43) mit einem Ende (46.1) einer Betätigungsstange (46) verbunden ist, die ein entgegengesetztes Ende (46.2) hat, das so ausgebildet ist, dass es mit der zweiten Platte zusammenwirkt, wenn die Gelenkverbindung in ihrer eingeklappten Position ist, derart, dass der Bügel und die Betätigungsstange der Spannnocke ein Kniehebelgelenk durch Versteifen der Gelenkverbindung in ihrer Aufbewahrungsstellung bilden.

10. Klappfahrrad nach einem der Ansprüche 1 bis 9, **dadurch gekennzeichnet, dass** die Getriebemittel eine doppelte Zwischenscheibe (31) umfassen, die drehbar um die Gelenkverbindungsachse (25) zur Gelenkverbindung des hinteren Teils (4) mit dem zentralen Teil (3) des Rahmens (1) gelagert und einerseits mit den Tretkurbeln (5) verbunden ist, um durch diese angetrieben zu werden, und andererseits mit dem Hinterrad (26), um dieses anzutreiben.
